(19) Europäisches Patentamt

European Patent Office

Office européen des brevets

(11) **EP 2 675 098 A1**

(12) **EUROPEAN PATENT APPLICATION**

(43) Date of publication:
**18.12.2013 Bulletin 2013/51**

(51) Int Cl.:
**H04L 1/18** (2006.01)  **H04L 1/00** (2006.01)

(21) Application number: **12305679.8**

(22) Date of filing: **15.06.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Alcatel Lucent**
**75007 Paris (FR)**

(72) Inventors:
• **Braun, Volker**
**70176 Stuttgart (DE)**
• **Doetsch, Uwe**
**74392 Freudental (DE)**

(74) Representative: **Kleinbub, Oliver et al**
**Alcatel-Lucent Deutschland AG**
**Intellectual Property & Standards**
**Lorenzstrasse 10**
**70435 Stuttgart (DE)**

(54) **A method for determination of an appropriate data compression for retransmission, and a network device therefor**

(57)    The invention concerns a method for determination of an appropriate data compression for retransmission of data from a first network device to a second network device, wherein a required quality of data to achieve a certain error rate (QMCS) is determined for a modulation and coding scheme used for a preceding transmission of data from the first network device to the second network device, expected qualities of data after retransmission (R1, R2, R4) are calculated for at least two data compression factors, and a compression factor of said at least two data compression factors is chosen for the retransmission of data which results in an expected quality of data after retransmission (R1, R2, R4) being higher than the required quality of data to achieve the certain error rate (QMCS), and a network device therefor.

Fig. 4

EP 2 675 098 A1

## Description

### Field of the invention

The invention relates to a method for determination of an appropriate data compression for retransmission of data from a first network device to a second network device, and a network device adapted to perform said method.

### Background

HARQ (HARQ = Hybrid Automatic Repeat Request) with chase combining or incremental redundancy is widely used in modern packet based wireless communication systems such as HSPA systems (HSPA = High Speed Packet Access) or LTE systems (LTE = Long Term Evolution). HARQ is used in these systems in conjunction with adaptive modulation and coding so as to compensate for transmission errors caused by imperfect link adaptation. Imperfect link adaptation causes significant throughput degradation as compared to the theoretical limits, despite of using HARQ.

With HARQ, typically a CRC check (CRC = Cyclic Redundancy Check) is performed upon reception of a first transmission of an encoded data packet and the result of the CRC check, PASS or FAIL, is reported to the transmitter as an ACK (ACK = positive acknowledgement) or a NACK (NACK = negative acknowledgement), respectively. In case of NACK, the transmitter performs a retransmission of the data packet, and soft combining of the codewords of the received first transmission and the received retransmission is performed by the receiver before the decoding. Soft combining improves error rate performance as compared to simply discarding the first transmission attempt at the receiver.

With chase combining, the retransmission uses the same codeword size and same RV parameters (RV = redundancy version), i.e. puncturing patterns, as the first transmission. The retransmission of the whole codeword size of the first transmission may consume more radio link capacity than required.

With incremental redundancy only a subset of the information bits or none of the information bits of the first transmission and only parity bits are retransmitted. By using such kind of HARQ process the consumption of radio link capacity can be reduced but the transmitter of the retransmission usually does not know, which subset of information bits should be retransmitted for performing a complete error-free recovery of the data of the first transmission.

The way of performing a retransmission of data in a radio communication system effects the amount of radio resources required for signalling information, effects the amount of radio resources required for the retransmissions, effects the transmission delay for the data, and effects data handling at the transmitter and at the receiver.

According to a method for retransmitting data from a first network node of the radio communication system to a second network node of the radio communication system, a first data block is transmitted from the first network node to the second network node, the first data block comprising an information part, a second data block with redundancy information of data elements of the first data block is determined at the first network node by applying an information compression, such as puncturing or a combination of data elements e.g. a modulo-2 addition of information bits, to the data elements, and transmitting the second data block from the first network node to the second network node. The first and second network node may be a base station, a relay station or a user terminal.

The size of a retransmitted packet, i.e. the size of the second data block with redundancy information of data elements of the first data block can be compressed as compared to the size of the initial transmission, i.e. the size of the first data block comprising an information part. E.g. the size of the retransmitted packet could be half the size, or even less, of the initial transmission. In this way, a throughput gain of up to 33%, or even more, can be achieved when assuming a single retransmission for each packet, as e.g. 2 packets can be successfully transmitted in 3 time slots as compared to 2 packets in 4 time slots.

### Summary

The size of such retransmitted packets shall be chosen preferably low but at the same time guaranteeing with a high probability a successful decoding after retransmission.

The object of the invention is thus to propose a method for retransmission of data with a high probability of a successful decoding after retransmission preferably with a low size of the retransmitted packets.

A basic idea of the invention is to determine, e.g. by means of measurements or simulations, a required quality of data to achieve a certain error rate, as e.g. a block error rate (BLER) of 10%, for a modulation and coding scheme (MCS) that has been used for an initial transmission. Said required quality of data to achieve the certain error rate can e.g. be indicated in form of so-called soft information, as e.g. an average of absolute values of soft bits indicating e.g. a logarithmic likelihood ratio. As an alternative quality metric, also the error probability for the decoded sequence may be applied. Such a quality metric can be computed with a decoder that inherently provides reliability information on the decoded word such as the decoder described by A.R. Raghavan and C.W. Baum in the paper "A reliability output Viterbi algorithm with applications to hybrid ARQ," IEEE Trans. Inform. Theory, vol. 44, pp. 1214-1216, May 1998.

Furthermore, expected qualities of data after retransmission are calculated for several data compression factors. Said expected qualities of data after retransmission can e.g. be indicated in form of so-called soft information, as e.g. be based on a measured average of absolute values of soft bits indicating e.g. a logarithmic likelihood ratio of an initial transmission, taking into account expected gains due to the retransmission.

Said expected qualities of data after retransmission calculated for several data compression factors can be compared with the required quality of data to achieve the certain error rate, and a compression factor is chosen for the retransmission of data which results in an expected quality of data after retransmission being higher than the required quality of data to achieve the certain error rate.

The object of the invention is thus achieved by a method for determination of an appropriate data compression for retransmission of data from a first network device to a second network device, wherein

- a required quality of data to achieve a certain error rate is determined for a modulation and coding scheme used for a preceding transmission of data from the first network device to the second network device,
- expected qualities of data after retransmission are calculated for at least two data compression factors,
- and a compression factor of said at least two data compression factors is chosen for the retransmission of data which results in an expected quality of data after retransmission being higher than the required quality of data to achieve the certain error rate.

The object of the invention is furthermore achieved by a network device for determination of an appropriate data compression for retransmission of data from a further network device to said network device, wherein said network device is adapted to

- determine a required quality of data to achieve a certain error rate for a modulation and coding scheme used for a preceding transmission of data from the further network device to the network device,

- compare said required quality of data with expected qualities of data after retransmission for at least two data compression factors,

- and choose a compression factor of said at least two data compression factors for the retransmission of data which results in an expected quality of data after retransmission being higher than the required quality of data to achieve the certain error rate.

The invention is described in the following within the framework of 3GPP LTE, however as the invention is not restricted to 3GPP LTE or enhancements thereof, but can in principle be applied in other networks that use scheduling principles based on retransmission, like e.g. in HSPA or WiMAX networks (WiMAX = Worldwide Interoperability for Microwave Access), in the following, instead of the term eNodeB used in LTE, the more general term base station is used.

Further developments of the invention can be gathered from the dependent claims and the following description.

**Brief description of the figures**

In the following the invention will be explained further making reference to the attached drawings.

Fig. 1 schematically shows a communication network in which the invention can be implemented.

Fig. 2 schematically shows the structure of a user terminal and a base station in which the invention can be implemented.

Fig. 3 schematically shows an example of a message flow for a downlink HARQ process using multi-level ACK/ NACK indicating a determined appropriate data compression factor for retransmission according to an embodiment of the invention.

Fig. 4 schematically shows an example of a procedure for determination of an appropriate compression factor for retransmission according to an embodiment of the invention.

**Description of the embodiments**

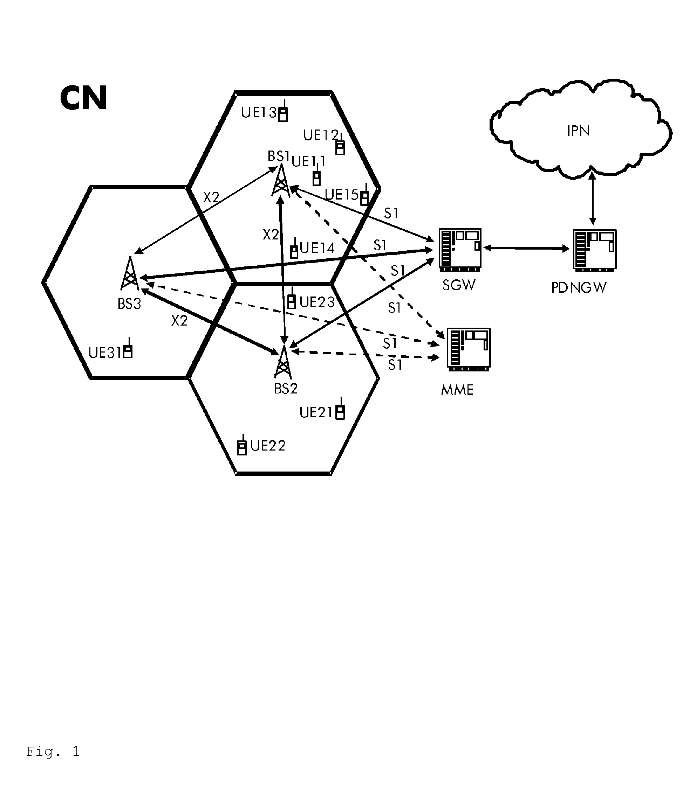

Fig. 1 shows as an example of a communication network in which the invention can be implemented a communication network CN according to the standard 3GPP LTE.

Said communication network CN comprises base stations BS1-BS3, user terminals UE11-UE31, a serving gateway SGW, a packet data network gateway PDNGW, and a mobility management entity MME.

The user terminals UE11-UE15 are connected via radio connections to the base station BS1, the user terminals UE21-UE23 are connected via radio connections to the base station BS2, and the user terminal UE31 is connected via a radio connection to the base station BS3. In future evolutions of LTE, each of the user terminals UE11-UE31 can also be connected via radio connections to multiple of said base stations BS1-BS3.

The base stations BS1-BS3 are in turn connected to the serving gateway SGW and to the mobility management entity MME, i.e. to the evolved packet core (EPC), via the so-called S1 interface.

The base stations BS1-BS3 are connected among each other via the so-called X2 interface.

The serving gateway SGW is connected to the packet data network gateway PDNGW, which is in turn connected to an external IP network IPN.

The S1 interface is a standardized interface between one of the base stations BS1-BS3, i.e. an eNodeB in this example, and the Evolved Packet Core (EPC). The S1 interface has two flavours, S1-MME for exchange of signalling messages between one of the base stations BS1-BS3 and the mobility management entity MME and S1-U for the transport of user datagrams between one of the base stations BS1-BS3 and the serving gateway SGW.

The X2 interface is added in 3GPP LTE standard primarily in order to transfer the user plane signal and the control plane signal during handover.

The serving gateway SGW performs routing of the IP user data between the base stations BS1-BS3, and the packet data network gateway PDNGW. Furthermore, the serving gateway SGW serves as a mobile anchor point during handover either between different base stations, or between different 3GPP access networks.

The packet data network gateway PDNGW represents the interface to the external IP network IPN and terminates the so-called EPS bearer (EPS = Evolved Packet System) which is established between a user terminal and the respective serving base station BS1-BS3.

The mobility management entity MME performs tasks of the subscriber management and the session management, and also performs the mobility management during handover between different access networks.

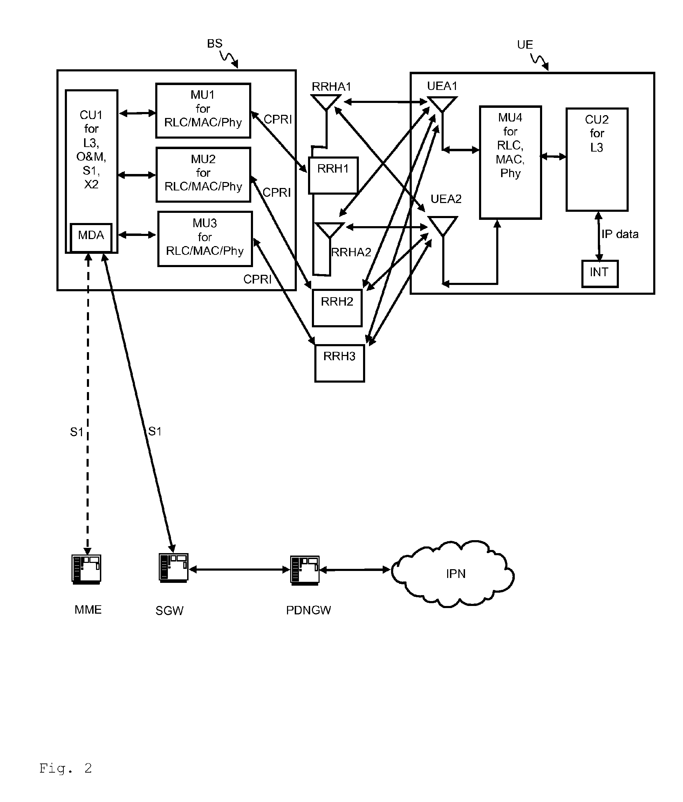

Fig. 2 schematically shows the structure of a user terminal UE and a base station BS in which the invention can be implemented.

The base station BS comprises by way of example three modem unit boards MU1-MU3 and a control unit board CU1, which in turn comprises a media dependent adapter MDA.

The three modem unit boards MU1-MU3 are connected to the control unit board CU1, and to a respective remote radio head RRH1, RRH2, or RRH3 via a so-called Common Public Radio Interface (CPRI).

Each of the remote radio heads RRH1, RRH2, and RRH3 is connected by way of example to two remote radio head antennas RRHA1 and RRHA2 for transmission and reception of data via a radio interface. Said two remote radio head antennas RRHA1 and RRHA2 are only depicted for the remote radio head RRH1 in fig. 2 for the sake of simplicity.

The media dependent adapter MDA is connected to the mobility management entity MME and to the serving gateway SGW and thus to the packet data network gateway PDNGW, which is in turn connected to the external IP network IPN.

The user terminal UE comprises by way of example two user terminal antennas UEA1 and UEA2, a modem unit board MU4, a control unit board CU2, and interfaces INT.

The two user terminal antennas UEA1 and UEA2 are connected to the modem unit board MU4. The modem unit board MU4 is connected to the control unit board CU2, which is in turn connected to interfaces INT.

The modem unit boards MU1-MU4 and the control unit boards CU1, CU2 may comprise by way of example Field Programmable Gate Arrays (FPGA), Digital Signal Processors (DSP), micro processors, switches and memories, like e.g. Double Data Rate Synchronous Dynamic Random Access Memories (DDR-SDRAM) in order to be enabled to perform the tasks described below.

The remote radio heads RRH1, RRH2, and RRH3 comprise the so-called radio equipment, e.g. modulators and amplifiers, like delta-sigma modulators (DSM) and switch mode amplifiers.

In downlink, IP data received from the external IP network IPN are transmitted from the packet data network gateway PDNGW via the serving gateway SGW to the media dependent adapter MDA of the base station BS on an EPS bearer. The media dependent adapter MDA allows for a connectivity to different media like e.g. fiber or electrical connection.

The control unit board CU1 performs tasks on layer 3, i.e. on the radio resource control (RRC) layer, such as measurements and cell reselection, handover and RRC security and integrity.

Furthermore, the control unit board CU1 performs tasks for Operation and Maintenance, and controls the S1 interfaces, the X2 interfaces, and the Common Public Radio Interface.

The control unit board CU1 sends the IP data received from the serving gateway SGW to a modem unit board MU1-MU3 for further processing.

The three modem unit boards MU1-MU3 perform data processing on layer 2, i.e. on the PDCP layer (PDCP = Packet Data Convergence Protocol) which is e.g. responsible for header compression and ciphering, on the RLC layer (RLC = Radio Link Control) which is e.g. responsible for segmentation and Automatic Repeat Request (ARQ), and on the MAC layer (MAC = Media Access Control) which is responsible for MAC multiplexing and Hybrid Automatic Repeat Request (HARQ).

Furthermore, the three modem unit boards MU1-MU3 perform data processing on the physical layer, i.e. coding, modulation, and antenna and resource-block mapping.

The coded and modulated data are mapped to antennas and resource blocks and are sent as transmission symbols from the modem unit board MU1-MU3 over the Common Public Radio Interface to the respective remote radio head RRH1, RRH2, or RRH3, and the respective remote radio head antenna RRHA1, RRHA2 for transmission over an air interface.

The Common Public Radio Interface (CPRI) allows the use of a distributed architecture where base stations BS, containing the so-called radio equipment control, are connected to remote radio heads RRH1, RRH2, and RRH3 preferably via lossless fibre links that carry the CPRI data. This architecture reduces costs for service providers because only the remote radio heads RRH1, RRH2, and RRH3 containing the so-called radio equipment, like e.g. amplifiers, need to be situated in environmentally challenging locations. The base stations BS can be centrally located in less challenging locations where footprint, climate, and availability of power are more easily managed.

The user terminal antennas UEA1, UEA2 receive the transmission symbols, and provide the received data to the modem unit board MU4.

The modem unit board MU4 performs data processing on the physical layer, i.e. antenna and resource-block demapping, demodulation and decoding.

Furthermore, the modem unit board MU4 performs data processing on layer 2, i.e. on the MAC layer (MAC = Media Access Control) which is responsible for Hybrid Automatic Repeat Request (HARQ) and for MAC demultiplexing, on the RLC layer (RLC = Radio Link Control) which is e.g. responsible for reassembly and Automatic Repeat Request (ARQ), and on the PDCP layer (PDCP = Packet Data Convergence Protocol) which is e.g. responsible for deciphering and header compression.

The processing on the modem unit board MU4 results in IP data which are sent to the control unit board CU2, which performs tasks on layer 3, i.e. on the radio resource control (RRC) layer, such as measurements and cell reselection, handover and RRC security and integrity.

The IP data are transmitted from the control unit board CU2 to respective interfaces INT for output and interaction with a user.

In the uplink, data transmission is performed in an analogue way in the reverse direction from the user terminal UE to the external IP network IPN.

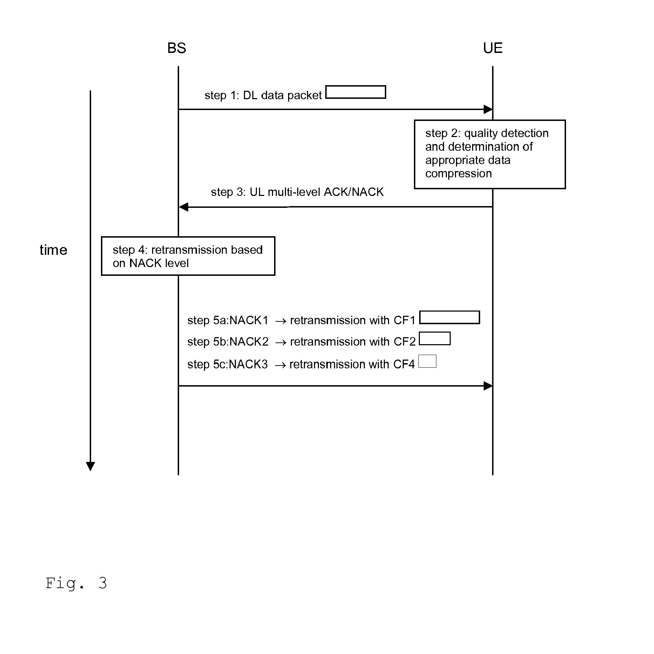

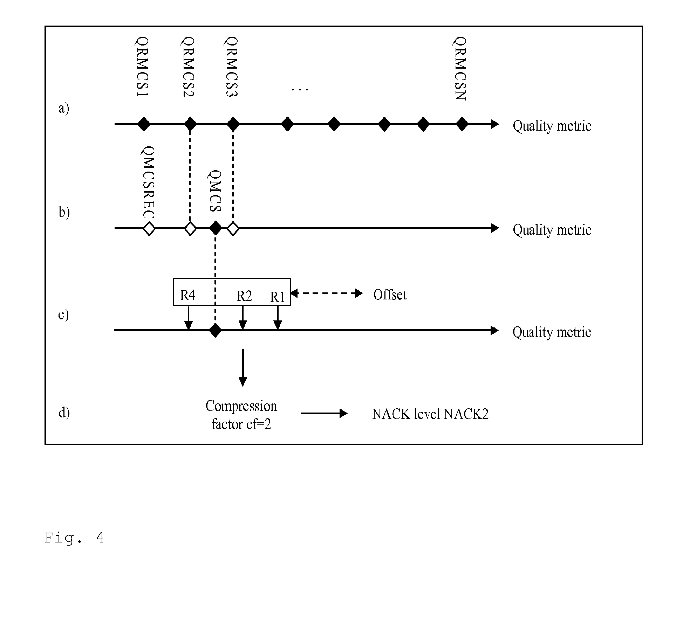

In the sequel, first in fig. 3 an example of a message flow for a downlink HARQ process using multi-level ACK/NACK indicating a determined appropriate data compression for retransmission according to an embodiment of the invention is described, and then in fig. 4, a procedure for determination of an appropriate compression factor for retransmission according to an embodiment of the invention is disclosed.

Fig. 3 schematically shows an example of a message flow between a base station BS and a user terminal UE, as e.g. depicted in fig. 2 and described above, for a downlink HARQ process using multi-level ACK/NACK indicating a determined appropriate data compression factor for retransmission according to an embodiment of the invention.

In step 1 of the method for a downlink HARQ process depicted in fig. 3, the base station BS transmits a downlink data packet e.g. in a Physical Downlink Shared Channel (PDSCH) to the user terminal UE.

In step 2, the quality of the received downlink data packet is evaluated in the user terminal UE. If the downlink data packet has been correctly decoded, then an ACK message will be sent to the base station BS in the next step 3. If the downlink data packet has not been correctly decoded, then a differentiation between the different NACK levels indicating different compression factors for retransmission, 3 NACK levels NACK1, NACK2 and NACK3 in this embodiment, is derived in the user terminal UE. Said differentiation between the different NACK levels is based on a comparison of a required quality of data to achieve a certain error rate with expected qualities of data after retransmission calculated for several data compression factors.

The required quality of data to achieve a certain error rate can e.g. be determined based on measurements or simulations.

The expected qualities of data after retransmission can be calculated for several data compression factors based e.g. on a measured average of absolute values of soft bits indicating e.g. a logarithmic likelihood ratio of an initial transmission.

A compression factor is chosen for the retransmission of data which results in an expected quality of data after retransmission being higher than the required quality of data to achieve the certain error rate.

The determination of an appropriate NACK level, i.e. compression factor for retransmission, according to an embodiment of the invention is described in more detail below under fig. 4.

As an example, the NACK level NACK1 can correspond to a compression factor 1, i.e. the retransmission has roughly the same size than the initial transmission, the NACK level NACK2 can correspond to a compression factor 2, i.e. the retransmission has roughly half the size of the initial transmission, and the NACK level NACK3 can correspond to a compression factor 4, i.e. the retransmission has roughly a quarter of the size of the initial transmission.

In step 3, the user terminal UE transmits an appropriate uplink multi-level ACK/NACK message dependent on the quality of the received downlink data packet evaluated in step 2. In case the downlink data packet has not been correctly decoded in the user terminal UE, the appropriate NACK level, i.e. the appropriate compression factor for retransmission, determined in step 2 is transmitted from the user terminal UE to the base station BS e.g. in a Physical Downlink Control Channel (PDCCH). In an alternative of the embodiment of the invention, e.g. a 1bit ACK/NACK message together with some bits for an explicit feedback of the appropriate compression factor for retransmission are signalled from the user terminal UE in step 3.

In step 4, in case of a received NACK message, the base station BS uses the compression factor indicated by the NACK level of the received multi-level NACK message for a retransmission of the downlink data packet, as each NACK level corresponds to a certain required redundancy for a successful decoding of the transmitted information. Thus, each NACK level triggers in the base station BS a retransmission with a certain compression factor.

In an alternative of the embodiment of the invention described above in step 4, the base station BS is free to select a compression factor different from the appropriate compression factor signalled in step 3.

In step 5a, in case of a received NACK level NACK1, the base station BS performs a retransmission of the downlink data packet with a compression factor 1.

In step 5b, in case of a received NACK level NACK2, the base station BS performs a retransmission of the downlink data packet with a compression factor 2.

In step 5c, in case of a received NACK level NACK3, the base station BS performs a retransmission of the downlink data packet with a compression factor 4. Fig. 4 schematically shows an example of a procedure for determination of an appropriate compression factor for retransmission according to an embodiment of the invention.

First, as depicted in a), a receiver, as e.g. the user terminal UE depicted in fig. 3, stores required qualities of data to achieve a certain error rate QRMCS1, QRMCS2,... QRMCSN for a set of N reference modulation and coding schemes RMCS1, RMCS2,... RMCSN. E.g., the reference modulation and coding schemes RMCS1, RMCS2 and RMCS3 can have the same coding, e.g. with code rate 0.5, and use BPSK (BPSK = Binary Phase Shift Keying), QPSK (QPSK = Quadrature Phase Shift Keying), and 64QAM (QAM = Quadrature Amplitude Modulation) respectively, and the required quality of data to achieve the certain error rate increases from QRMCS1 over QRMCS2 to QRMCS3, as more robust modulation and coding schemes, as e.g. BPSK, require a lower quality of data to achieve a certain error rate than less robust modulation and coding schemes, as e.g. 64QAM.

The required qualities of data to achieve the certain error rate QRMCS1, QRMCS2,... QRMCSN for the set of N reference modulation and coding schemes RMCS1, RMCS2,... RMCSN can be determined by simulations or measurements. E.g., measured averages of absolute values of soft bits indicating e.g. a logarithmic likelihood ratio (LLR) required to achieve a certain error rate, as e.g. a block error rate (BLER) of 10%, can be used as said required qualities of data to achieve the certain error rate QRMCS1, QRMCS2,... QRMCSN. The LLR of each soft bit $x_i$ is readily available, either at input or preferably at output of a decoder, and LLR is therefore a suitable input to such a quality metric computation. In the sequel, we will use $avrg|LLR(x_i)|$ as an example of a quality metric to select the compression factor for retransmission. Apart from simple formulas such as computing average or variance of LLR values, also more complex formulas can be thought of, e.g. derived from cumulative distribution function $CDF|LLR(x_i)|$, e.g. taking into account a certain percentile of the weakest $|LLR(x_i)|$, or utilizing an analogy of the mutual information-based so-called MIESM link-to-system interface in the LLR domain (MIESM = Mutual Information based exponential Signal-to-noise ratio Mapping).

Then, as depicted in b), from the required qualities of data to achieve the certain error rate QRMCS1, QRMCS2,... QRMCSN for the set of N reference modulation and coding schemes RMCS1, RMCS2,... RMCSN, a required quality of data to achieve the certain error rate QMCS is derived for the modulation and coding scheme MCS used for the first transmission to the receiver, with the modulation and coding scheme MCS being known by the receiver.

This can be done e.g. by interpolation of required qualities of data to achieve the certain error rate QRMCS1, QRMCS2,... QRMCSN for reference modulation and coding schemes RMCS1, RMCS2,... RMCSN, as e.g. shown in b) for the case of interpolation between QRMCS2 and QRMCS3 to determine the required quality of data to achieve the certain error rate QMCS for the modulation and coding scheme MCS. In this example, the reference modulation and coding schemes RMCS2 and RMCS3 are QPSK and 64QAM respectively, and the modulation and coding scheme MCS used for the first transmission to the receiver shall be 16 QAM. Thus, the the required quality of data to achieve the certain error rate QMCS for the modulation and coding scheme MCS used for the first transmission to the receiver can be determined by interpolation between QRMCS2 and QRMCS3.

As an alternative, simply the required quality of data to achieve the certain error rate QRMCS3 for the next less robust reference modulation and coding scheme RMCS3 is used as an approximation for the required quality of data to achieve the certain error rate QMCS for the modulation and coding scheme MCS used for the first transmission to the receiver.

Also depicted in b) is a quality of data received by the receiver, i.e. the user terminal UE, for the first transmission QMCSREC, which is below the required quality of data to achieve the certain error rate QMCS for the modulation and coding scheme MCS used for the first transmission to the receiver, and which resulted in an unsuccessful decoding of the first transmission.

As depicted in c), for a set of compression factors cf, as e.g. cf=1, 2, 4, expected qualities of data after retransmission $R_{cf}$ are calculated e.g. according to the following formula:

$$R_{cf} = (1 + \frac{1}{cf}) avrg \mid s \mid \times OffsetFactor,$$

$$OffsetFactor = 10^{P_0/10}.$$

The factor (1+1/cf) simply corresponds to a predicted achieved gain of 3dB, 1.76dB, 0.96dB for the compression factors cf=1, 2, 4, respectively, as characteristic for a retransmission with Chase Combining. The factor $avrg|s|$ corresponds to a measured average of absolute values of soft bits s indicating e.g. a logarithmic likelihood ratio of the first transmission as described in the following in more detail.

Downlink data received in the user terminal UE are processed as soft bits. Soft bits are obtained after demodulation and prior to FEC decoding (FEC = Forward Error Correction), i.e. analogue so-called IQ values are typically converted into soft bits by a demodulator prior to FEC decoding. By using soft-input soft-output decoders, such as iterative Turbo decoders, soft bits will be obtained at decoder output typically having improved quality as compared to the soft bits at the decoder input. A soft bit s indicates e.g. the logarithmic likelihood ratio that a measured value y corresponds to a bit b=1 or b=0 according to the following formula:

$$s = \ln\left(\frac{P(y|b=1)}{P(y|b=0)}\right).$$

In this formula $P(y|b=1)$ and $P(y|b=0)$ indicate the probability that the measured value y corresponds to a bit b=1 or b=0. Thus, a high positive value for s indicates, that the measured value is very likely "1", and a high negative value for s indicates that the measured value is very likely "0". A value s=0 indicates that "1" and "0" have an equal probability.

E.g. based on the formula $s = \ln\left(\frac{P(y|b=1)}{P(y|b=0)}\right)$ for calculating soft bits s as given above, the absolute value of the soft bits can be determined as $|s| = \left|\ln\left(\frac{P(y|b=1)}{P(y|b=0)}\right)\right|$. The higher the absolute value of a soft bit s is, the higher the reliability and thus the quality of the soft bit s is.

As already indicated above, an average of the absolute values of the soft bits s of a downlink data packet can be determined.

Based on said average of the absolute values of the soft bits s of the downlink data packet, expected qualities of data after retransmission $R_{cf}$ are determined for several compression factors cf.

A method for determination of expected qualities of data after retransmission, and thus for determination of an appropriate NACK level, i.e. compression factor, according to an embodiment of the invention is described in the following.

An offset, e.g. the OffsetFactor in the above equations, can be used to fine-tune the computation of expected qualities of data after retransmission $R_{cf}$ e.g. derived from an offset parameter $P_0$ in dB units. Said offset enables to take into account a margin for a link adaptation policy, e.g. aggressive or cautious. As an alternative to a generic offset, a set of cf-specific offsets can be used.

In the example depicted in c), three expected qualities of data after retransmission $R_1$, $R_2$ and $R_4$ for the compression factors cf=1, 2, 4, respectively are shown.

The expected qualities of data after retransmission $R_{cf}$ are compared to the required quality of data to achieve the certain error rate QMCS for the modulation and coding scheme MCS used for the first transmission to the receiver, and a compression factor cf is selected that satisfies the equation $R_{cf}$> QMCS in order to guarantee a successful decoding after retransmission. Preferably, the largest compression factor cf is selected that satisfies the equation $R_{cf}$> QMCS. If no such compression factor cf is found, the smallest compression factor cf is selected, e.g. cf=1 in this example.

Then, as depicted in d), a NACK level for the corresponding selected compression factor cf is selected. In the example depicted in fig. 4, a NACK level NACK2 corresponding to a compression factor cf=2 is selected and sent to the transmitter for preparing a respective retransmission.

In an alternative approach for computing the expected qualities of data after retransmission $R_{cf}$, a part of the receiver processing is emulated for fictive retransmissions for the set of possible compression factors cf.

In the following, $x_i$ shall denote the bits of the first transmission.

A fictive retransmitted soft bit is emulated with the absolute value of the logarithmic likelihood ratio of the first transmission $|LLR(x_i)|$, and the expected quality of the fictive retransmitted soft bit is calculated according to $R = avrg|LLR(x_i)|$. In other words, it is assumed that a retransmission would have similar quality of soft bits as the first transmission.

The $R_{cf}$ values are computed for the different compression factors cf as follows:

For compression factor cf =1:

The maximum ratio combining (MRC) of the first transmission and the fictive retransmission is emulated according to $\left|LLR(x_i')\right| = \left|LLR(x_i)\right| + R$ Then, $R_1 = avrg\left|LLR(x_i')\right|$ is computed, which corresponds to the equation described in the embodiment above.

For compression factor cf=2:

Here it is assumed that the retransmission is obtained by modulo-2 addition of a pair of bits of the initial transmission according to mod2 $(x_i, x_j)$. An XOR decoding and MRC is emulated according to $\left|LLR(x_i')\right| = \left|LLR(x_i)\right| + \min\left(R, \left|LLR(x_j)\right|\right)$. Apparently, if $x_i$ has poor quality it can be improved by the $x_j$ used for XOR, but the improvement is upper bounded by the quality of the fictive retransmitted soft bit. Then, $R_2 = avrg\left|LLR(x_i')\right|$ is computed.

For compression factor cf=4:

Here it is assumed that the retransmission is obtained by modulo-2 addition of a quadruple of bits of the initial transmission according to mod2 $(x_i, x_j, x_m, x_n)$. An XOR decoding and MRC is emulated according to $\left|LLR(x_i')\right| = \left|LLR(x_i)\right| + \min\left(R, \left|LLR(x_j)\right|, \left|LLR(x_m)\right|, \left|LLR(x_n)\right|\right)$. Apparently, if $x_i$ has poor quality it can be improved by the $x_j$ used for XOR, but the improvement is upper bounded by the quality of the fictive retransmitted soft bit and/or the weakest among $x_j, x_m, x_n$. Then, $R_4 = avrg\left|LLR(x_i')\right|$ is computed.

The algorithm sketched above can be implemented with quite some variety, for example:

- The modulo-2 addition mod2 $(x_i, x_j)$, where $x_i$ and $x_j$ can be drawn from the same codeword, e.g. from the initial transmission, or from different codewords, e.g. from the initial transmission and a prior transmission, generally includes a permutation function linking the indices i and j. To reduce computational complexity the permutation function could be replaced by a fixed offset, i.e. j=i+N, or j could be drawn by pseudo-random function.

- Computational complexity could also be reduced by computing only for a subset of the bits $x_i$, e.g. selected by a pseudo-random function.

- The fictive retransmission could be replaced by a random sequence, e.g. drawn from the first transmission or from another previously received codeword.

- The quality of the fictive retransmission R can be adapted by applying an offset, *e.g. R = avrg|LLR($x_i$)|×offsetFactor,* preferably configurable.

- The algorithm above emulates a retransmission with Chase Combining. Extensions for Incremental Redundancy are possible, e.g. by applying a correction term.

In a further embodiment of the invention, a fictive combining plus decoding could be performed, e.g. by generating a fictive codeword and modulating it into soft bits by means of the available bits $x_i$ of the first transmission while emulating the retransmission similarly as sketched above, and by performing an actual decoding of the fictive retransmission after combining.

In case of UL HARQ, the selected compression factor cf is transferred to an UL scheduler in the base station BS.

In case of DL HARQ, a NACK level is reported by the user terminal UE to recommend a retransmission with a corresponding compression factor cf.

Although the embodiments described above are for Chase Combining, this does not preclude the use of Incremental Redundancy for the actual retransmission, as the invention is purely related to a decision for an appropriate NACK level.

In the sequel, some preferred implementations and options concerning configuration and signaling issues for DL HARQ and UL HARQ are described.

DL HARQ:

- In an embodiment, the user terminal UE is informed about the set of compression factors cf for which to compute the expected quality metric. This can be fixed in the standard, e.g tied to a QoS type (QoS = Quality of Service), or be configured , e.g. depending on load in the cell with more compression for higher load, or depending on radio conditions with more compression for better radio conditions, typically with RRC signaling, as e.g. RL setup/reconfig procedures.

- In an embodiment, the user terminal UE is configured in which way to report ACK/NACK such as the number of ACK/NACK levels and/or the relation of compression factor cf to ACK/NACK level. In a preferred embodiment the number of reported ACK/NACK levels is equal to the number of compression factors cf for which to compute the expected quality metric.

- In an embodiment, the user terminal UE reports multi-level ACK/NACK to the base station BS which is meant to recommend a compression factor cf for the retransmission, however the base station BS is free to select another compression factor cf.

- In an embodiment, the compression factor cf used for actual DL transmission is signaled to the user terminal UE, typically via DL control signaling on DL control channel. This requires a few bits extra on the control signaling payload of DL grant, e.g. 2bits to indicate compression factor 1, 2, 4, e.g. depending on multi-level ACK/NACK and load in the cell with more compression for higher load. This extra signaling load for the compression factor cf during retransmission may be compensated, e.g. by implying that a retransmission uses the same modulation and coding scheme or the same transport block size prior to encoding as the initial transmission, such that the modulation and coding scheme or the transport block size need not be included in the DL control information of a retransmission, or such parameters may be included with reduced granularity e.g. by applying a delta-signaling as compared to the initial transmission. The embodiment is applicable in an analogue way for UL transmission using UL control information for explicitly signaling the compression factor cf.

- In an embodiment, the compression factor cf used for actual DL transmission may be implicitly indicated to the user terminal, in that the user terminal derives cf e.g. from the signaled transport block size, or from the signaled resource assignment and modulation and coding scheme, e.g. if the signaled modulation and coding scheme is identical to the one of the initial transmission and the amount of assigned resources is only half of that of the initial transmission a compression factor cf = 2 will be derived by the user terminal, or if the signaled transport block size is only a quarter of the transport block size of the initial transmission a compression factor cf = 4 will be derived by the user terminal. The embodiment is applicable in an analogue way for UL transmission deriving from UL control information the implicitly signaled compression factor cf.

- In an embodiment, the number N of reference modulation and coding schemes RMCSN, the format of reference modulation and coding schemes RMCSN and the target BLER to be used by the user terminal UE can be vendor-specific or may be predefined by standard, e.g. to ease testing. The same reference modulation and coding schemes RMCSN and/or target BLER can be used as for Channel Quality Indicator (CQI) processing, e.g. 10% BLER. This may reduce implementation complexity. The number N of reference modulation and coding schemes RMCSN may also be larger or smaller than for CQI processing.

- In an embodiment, the quality metric, interpolation techniques, and computation of $R_{cf}$ can be UE vendor-specific, as with CQI computation. The offset parameter $P_0$ is typically signaled to the user terminal UE with RRC signaling, as e.g. RL setup/reconfig procedures, and typically has fine granularity, say 0.1dB steps and covers a range of say - 1.5:0.1:1.5 dB. Fine-tuning of the quality metric $R_{cf}$ taking into account receiver issues such as imperfect combining, or gains with incremental redundancy are typically vendor-specific. The latter could be enabled by the user terminal UE receiving a priori information on usage strategy of redundancy version (RV) parameters from the base station BS. E.g. 1 bit can be signaled to the user terminal UE with RRC signaling, as e.g. RL setup/reconfig procedures, to differentiate Chase Combining or Incremental Redundancy, or a sequence of RV parameters applied by the base station BS, so that the user terminal UE can differentiate between Chase Combining (CC) and Incremental Redundancy (IR) when computing the quality metric $R_{cf}$.

UL HARQ:

- In an embodiment, the base station BS is configured via O&M or from a higher network node, as a Radio Network Controller (RNC), e.g. by a Node B Application Part (NBAP) protocol about the set of compression factors cf to be used for retransmissions, e.g tied to a QoS type.

- In an embodiment, the number N of reference modulation and coding schemes RMCSN, the format of reference modulation and coding schemes RMCSN and the target BLER used by the base station BS are vendor-specific.

- In an embodiment, the quality metric, interpolation techniques, and computation of $R_{cf}$ including fine-tuning are base station vendor-specific. The offset parameter $P_0$ is typically signaled to base station BS from O&M or from higher network node, as a Radio Network Controller (RNC), e.g. by a Node B Application Part (NBAP) protocol.

- In an embodiment, the compression factor cf used for actual UL transmission is signaled to the user terminal UE, typically via DL control signaling on DL control channel. This would require a few bits extra on the control signaling payload of UL grant, e.g. 2bits to indicate compression factor 1, 2, 4.

**Claims**

1. A method for determination of an appropriate data compression for retransmission of data from a first network device (BS) to a second network device (UE), wherein

    • a required quality of data to achieve a certain error rate (QMCS) is determined for a modulation and coding scheme used for a preceding transmission of data from the first network device (BS) to the second network device (UE),
    • expected qualities of data after retransmission (R1, R2, R4) are calculated for at least two data compression factors,
    • and a compression factor of said at least two data compression factors is chosen for the retransmission of data which results in an expected quality of data after retransmission (R1, R2, R4) being higher than the required quality of data to achieve the certain error rate (QMCS).

2. A method according to claim 1, wherein said required quality of data (QMCS) is determined in the second network device (UE).

3. A method according to any of the preceding claims, wherein said required quality of data (QMCS) is determined based on predetermined qualities of data required to achieve the certain error rate (QRMCS1, QRMCS2,...QRMCSN) for at least two reference modulation and coding schemes.

4. A method according to claim 3, wherein said required quality of data (QMCS) is determined by interpolation of predetermined qualities of data required to achieve the certain error rate (QRMCS1, QRMCS2,...QRMCSN) for at least two reference modulation and coding schemes.

5.  A method according to claim 3, wherein a lowest predetermined quality (QRMCS3) of said predetermined qualities of data required to achieve the certain error rate (QRMCS1, QRMCS2,...QRMCSN) for at least two reference modulation and coding schemes which is higher than said required quality of data (QMCS) is selected as an approximation of said required quality of data (QMCS).

6.  A method according to any of the preceding claims, wherein said compression factor of said at least two data compression factors being chosen for the retransmission of data results in a lowest quality of data (R2) being higher than the required quality of data (QMCS).

7.  A method according to any of the preceding claims, wherein said required quality of data (QMCS) is determined based on at least one of a group of measurements and simulations of qualities of data and respective error rates.

8.  A method according to any of the preceding claims, wherein at least one of the group of the required quality of data (QMCS) and the expected qualities of data after retransmission (R1, R2, R4) which are calculated for at least two data compression factors are based on a quality of soft bits.

9.  A method according to any of the preceding claims, wherein the expected qualities of data after retransmission (R1, R2, R4) which are calculated for at least two data compression factors are calculated using an offset factor taking into account a link adaptation policy.

10. A method according to any of the preceding claims,
    wherein information on usage strategy of redundancy version parameters is a priori signaled to the second network device (UE).

11. A method according to any of the preceding claims, wherein said at least two data compression factors are signaled to the second network device (UE).

12. A method according to any of the claims 1-10, wherein the compression factor of said at least two data compression factors which is chosen for the retransmission of data is signaled to the second network device (UE) in at least one of a group of uplink control information and downlink control information.

13. A method according to any of the claims 1-10, wherein the compression factor of said at least two data compression factors which is chosen for the retransmission of data is derived in the second network device (UE) from at least one of the group of a signaled transport block size, and a signaled resource assignment and modulation and coding scheme.

14. A network device (UE) for determination of an appropriate data compression for retransmission of data from a further network device (BS) to said network device (UE), wherein said network device (UE) is adapted to

    • determine a required quality of data to achieve a certain error rate (QMCS) for a modulation and coding scheme used for a preceding transmission of data from the further network device (BS) to the network device (UE),
    • compare said required quality of data (QMCS) with expected qualities of data after retransmission (R1, R2, R4) for at least two data compression factors,
    • and choose a compression factor of said at least two data compression factors for the retransmission of data which results in an expected quality of data after retransmission (R2) being higher than the required quality of data to achieve the certain error rate (QMCS).

15. A network device (UE) according to claim 14, wherein said network device (UE) is adapted to calculate the expected qualities of data after retransmission (R1, R2, R4) for at least two data compression factors.

16. A communication network for mobile communication comprising at least one network device (UE) according to claim 14.

Fig. 1

Fig. 2

Fig. 3

Fig. 4

Europäisches
Patentamt

European
Patent Office

Office européen
des brevets

## EUROPEAN SEARCH REPORT

Application Number

EP 12 30 5679

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 624 606 A1 (MATSUSHITA ELECTRIC IND CO LTD [JP] PANASONIC CORP [JP]) 8 February 2006 (2006-02-08) * page 2, paragraph 8 - paragraph 9 * * page 3, paragraph 16 * * page 5, paragraph 29 - page 6, paragraph 33 * * page 6, paragraph 36 - page 7, paragraph 49; figures 8,9 * | 1-3,5-8, 10-16 | INV. H04L1/18 H04L1/00 |
| | ----- | | |
| X | US 7 027 782 B2 (MOON YONG-SUK [KR] ET AL) 11 April 2006 (2006-04-11) * column 11, line 18 - column 12, line 8 * * column 13, line 52 - line 65 * * column 15, line 55 - column 16, line 12 * * column 17, line 55 - column 18, line 2 * * column 25, line 42 - column 26, line 58 * | 1-3,5-9, 11-16 | |
| | ----- | | |
| A | US 2006/153155 A1 (JACOBSEN PHILLIP [CA] ET AL) 13 July 2006 (2006-07-13) * page 3, left-hand column, paragraph 45 - paragraph 46 * * page 5, right-hand column, paragraph 88 * * page 9, left-hand column, paragraph 118 - paragraph 119 * | 1,14,16 | TECHNICAL FIELDS SEARCHED (IPC)  H04L |
| | ----- | | |

The present search report has been drawn up for all claims

| Place of search | Date of completion of the search | Examiner |
|---|---|---|
| The Hague | 11 October 2012 | Papantoniou, Antonis |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT**
**ON EUROPEAN PATENT APPLICATION NO.**                   EP 12 30 5679

This annex lists the patent family members relating to the patent documents cited in the above-mentioned European search report.
The members are as contained in the European Patent Office EDP file on
The European Patent Office is in no way liable for these particulars which are merely given for the purpose of information.

11-10-2012

| Patent document cited in search report | | Publication date | Patent family member(s) | | Publication date |
|---|---|---|---|---|---|
| EP 1624606 | A1 | 08-02-2006 | CN | 1788447 A | 14-06-2006 |
| | | | EP | 1624606 A1 | 08-02-2006 |
| | | | JP | 4224337 B2 | 12-02-2009 |
| | | | JP | 2004312253 A | 04-11-2004 |
| | | | US | 2006190796 A1 | 24-08-2006 |
| | | | WO | 2004091128 A1 | 21-10-2004 |
| US 7027782 | B2 | 11-04-2006 | AU | 2002301552 B2 | 29-04-2004 |
| | | | CA | 2408875 A1 | 19-04-2003 |
| | | | CN | 1434647 A | 06-08-2003 |
| | | | DE | 10248706 A1 | 15-05-2003 |
| | | | FI | 20021864 A | 20-04-2003 |
| | | | FR | 2831369 A1 | 25-04-2003 |
| | | | GB | 2381719 A | 07-05-2003 |
| | | | JP | 3566273 B2 | 15-09-2004 |
| | | | JP | 2003198429 A | 11-07-2003 |
| | | | KR | 20030032698 A | 26-04-2003 |
| | | | SE | 523495 C2 | 20-04-2004 |
| | | | SE | 0203086 A | 20-04-2003 |
| | | | US | 2003076870 A1 | 24-04-2003 |
| US 2006153155 | A1 | 13-07-2006 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- A reliability output Viterbi algorithm with applications to hybrid ARQ. *IEEE Trans. Inform. Theory,* May 1998, vol. 44, 1214-1216